# EUROPÄISCHE PATENTSCHRIFT

(11) **EP 1 515 065 B1**
(45) Veröffentlichungstag und Bekanntmachung des Hinweises auf die Patenterteilung: **28.06.2006**
(21) Anmeldenummer: 04019872.3
(22) Anmeldetag: 21.08.2004
(51) Int. Cl.: F16F 15/134

(54) **Antriebsanordnung**
Drive assembly
Système d'entraînement

(30) Priorität: 13.09.2003 DE 10342379
(43) Veröffentlichungstag der Anmeldung: 16.03.2005
(73) Patentinhaber: ZF FRIEDRICHSHAFEN AG, 88046 Friedrichshafen (DE)
(72) Erfinder: Welke, Knut, 97529 Sulzheim (DE); Zimmer, Manfred, 97475 Zeil (DE); Damhus, Ralf, 97422 Schweinfurt (DE)

(56) Entgegenhaltungen:
- DE-A- 10 005 996
- DE-A- 10 023 113
- DE-A- 10 115 504

## Beschreibung

Die Erfindung betrifft eine Antriebsanordnung gemäß dem Oberbegriff des Patentanspruchs 1. Eine solche Antriebsanordnung wird in der DE-A-100 05 996 beschrieben.

Torsionsschwingungsdämpfer sind allgemein bekannt. Diese werden beispielsweise in Kraftfahrzeugen benutzt, um die von einem Verbrennungsmotor ausgehenden Torsionsschwingungen gegenüber dem Antriebsstrang möglichst weitgehend zu isolieren und damit den Fahrkomfort zu erhöhen. Bei modernen Fahrzeugen haben sich insbesondere Zweimassenschwungräder (ZMS) durchgesetzt, die im nutzbaren Drehzahlbereich, d.h. zwischen der Leerlaufdrehzahl und einer maximalen Drehzahl, infolge ihrer geringen Drehsteifigkeit wirksam zur Schwingungsdämpfung beitragen. Der prinzipielle Aufbau und die Wirkungsweise eines Torsionsschwingungsdämpfers sind beispielsweise in der DE 196 09 043 C1 beschrieben.

Elektrische Maschinen sind ebenfalls allgemein bekannt. Seit einiger Zeit gibt es Bestrebungen elektrische Maschinen als sogenannte Startergeneratoren in den Antriebsstrang eines Kraftfahrzeuges zu integrieren, wobei diese einerseits in deren motorischen Betriebsweise zum Starten des Verbrennungsmotors und allein oder im Zusammenwirken mit dem Verbrennungsmotor zum Antreiben des Fahrzeuges genutzt werden können. Weiterhin kann ein Startergenerator bei verbrennungsmotorischen Betrieb des Fahrzeuges als Generator arbeiten. Derartige Startergeneratoren können also bisherige Starter und Generatoren durch ein einziges Aggregat ersetzen. Beispielsweise kann der Startergenerator in einer besonders bevorzugten Variante als permanenterregte Synchronmaschine ausgebildet sein, die zwischen der Kurbelwelle des Verbrennungsmotors und einer Kupplung, beziehungsweise einem Getriebe, im Antriebsstrang eines Fahrzeuges angeordnet ist.

Die vorliegende Erfindung stellt sich die Aufgabe, eine kompakt gebaute Antriebsanordnung aus einer elektrischen Maschine und einem Torsionsschwingungsdämpfer für ein Fahrzeug mit einem Verbrennungsmotor bereitzustellen.

Die vorstehend genannte Aufgabe wird gelöst durch eine Antriebsanordnung mit den kennzeichnenden Merkmalen des Patentanspruchs 1.

Durch die Ausbildung des Rotors der elektrischen Maschine als Außenläufer unter gleichzeitiger Bildung einer der Schwungmassen des Torsionsschwingungsdämpfers und die Anordnung des Federspeichers radial außerhalb des Rotors wird eine sehr bauraumsparende Anordnung geschaffen. Die Federspeicher des Schwingungsdämpfers liegen dabei auf einem vergleichsweise großen Durchmesser und können hinsichtlich einer vorgegebenen Federcharakteristik genau den jeweils vorhandenen Verbrennungsmotor bzw. Antriebsstrang angepasst werden. Der zur Erzeugung des Drehmomentes der elektrischen Maschine maßgebliche Luftspaltdurchmesser zwischen Rotor und Stator wird zwar durch diese Bauweise etwas verringert, jedoch wird dieser Effekt durch die Außenläuferbauart der elektrischen Maschine in Grenzen gehalten. Die Erzeugung eines hinreichenden mechanischen Drehmomentes oder generatorischen Momentes wird durch eine Erhöhung der aktiven Länge der elektrischen Maschine erreicht, welche jedoch vergleichsweise gering ist, so dass sich bei der erfindungsgemäßen Kombination einer elektrischen Maschine mit einem Torsionsschwingungsdämpfer insgesamt ein bedeutender Bauraumgewinn und eine erhebliche Komfortverbesserung ergibt.

Vorteilhafte Ausgestaltungen und Weiterbildungen der Erfindung sind in den Unteransprüchen angegeben.

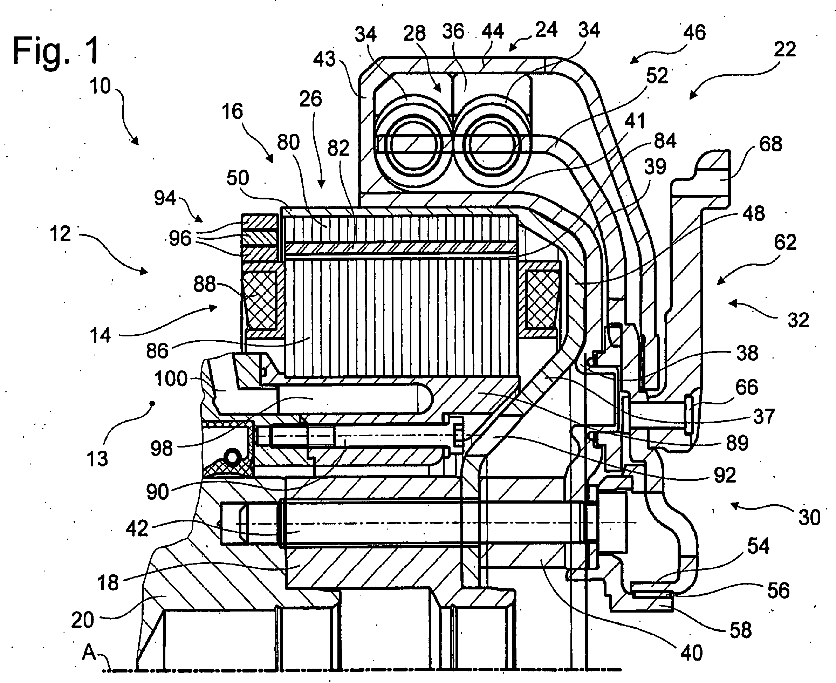

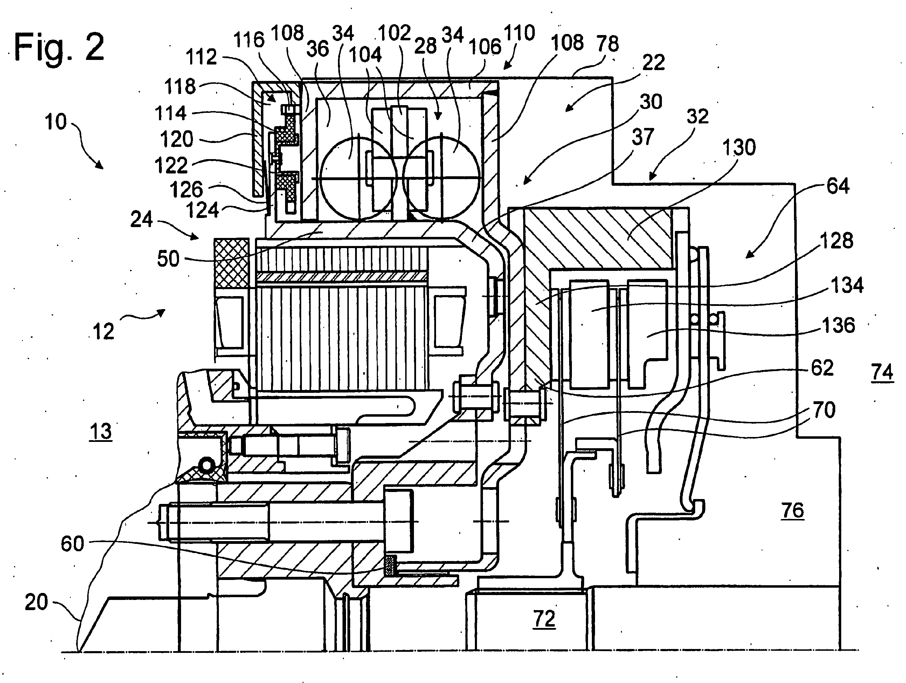

Die Erfindung wird nachfolgend an den Ausführungsbeispielen gemäß der Figuren 1 und 2 beispielhaft erläutert. Sofern nicht besonders darauf hingewiesen wird, gelten die für eine Figur beschriebenen Merkmale auch für die jeweils andere Figur. In den Figuren sind gleiche oder gleichwirkende Teile weitestgehend mit denselben Bezugszeichen versehen. Es zeigen:
- Fig. 1: eine Antriebsanordnung bestehend aus einer elektrischen Maschine mit einem Torsionsschwingungsdämpfer, dessen Ausgangsteil zur Verbindung mit einer Standard-Reibungskupplung vorgesehen ist,
- Fig. 2: eine gegenüber der Fig. 1 abgewandelte Antriebsanordnung, welche einen veränderten Torsionsschwingungsdämpfer mit einem Planetengetriebe und eine Zweischeiben-Reibungskupplung aufweist.

Die Figuren 1 und 2 zeigen eine Antriebsanordnung 10 für ein Kraftfahrzeug mit einer elektrischen Maschine 12 mit einem Stator 14 und einem Rotor 16, welcher über ein Distanzstück 18 mit der Kurbelwelle 20 eines Verbrennungsmotors 13 drehfest verbunden ist.

Die elektrische Maschine 12 ist in diesem Beispiel als permanenterregte mehrphasige Synchronmaschine ausgebildet und fungiert als Startergenerator 12, wobei dieser eine motorische Betriebsweise zum Starten des Verbrennungsmotors 22 und zum Antreiben des Kraftfahrzeuges und weiterhin eine generatorische Betriebsweise zur Erzeugung von elektrischer Leistung für ein Kraftfahrzeugbordnetz aufweist. Die elektrische Maschine 12 ist mit einer nicht dargestellten konventionellen Fahrzeugbatterie und gegebenenfalls mit einer Fahrbatterie verbunden. Die Ansteuerung des Startergenerators 12 erfolgt über einen zeichnerisch nicht dargestellten Pulswechselrichter, der seine Schaltsignale von einer Steuerelektronik bezieht, die mit einer Motorsteuerung des Verbrennungsmotors oder mit einer diesen übergeordneten Fahrzeugsteuerungsvorrichtung kommuniziert.

Die Antriebsanordnung 10 umfasst weiterhin einen Torsionsschwingungsdämpfer 22 mit einem Eingangsteil 24 mit einer Primärschwungmasse 26 und einem mit diesem über einen Federspeicher 28 verbundenem Ausgangsteil 30 mit einer Sekundärschwungmasse 32, welcher zu dem Eingangsteil 24 relativ verdrehbar ist. Der Rotor 16 der elektrischen Maschine 12 ist als Außenläufer ausgebildet und fungiert gleichzeitig als die Primärschwungmasse 26 des Torsionsschwingungsdämpfers 22, wobei der Federspeicher 28 radial außerhalb und zumindest teilweise innerhalb der axialen Erstreckung des Rotors 16 angeordnet ist. Der Federspeicher 28 umfasst einzelne, axial benachbarte und jeweils in Umfangsrichtung angeordnete Federsätze 34, die in einer fettbefüllten Federkammer 36 angeordnet sind. Die Federkammer 36 ist - wie dieses bereits von Zweimasseschwungrädern bekannt ist - in Umfangsrichtung in eine Mehrzahl von segmentartigen Aufnahmeabschnitten unterteilt, wobei die Federsätze 34 in deren Wirkungsrichtung jeweils zwischen einem vom Eingangsteil 24 und einem vom Ausgangsteil 30 gebildeten Anschlag angeordnet sind und sich bei einer gegenseitigen Verdrehung von Eingangs- und Ausgangsteil 24, 30 an diesen abstützen können.

Der Rotor 16 weist einen als Tiefziehteil aus einem Blechmaterial gebildeten Rotorträger 37 auf, der in Figur 1 gemeinsam mit einem zum Eingangsteil 24 des Torsionsschwingungsdämpfers 22 zugehörigen topfförmigen ebenfalls als Tiefziehteil gefertigten erstem Trageteil 38 unter Zwischenlagerung eines weiteren Distanzstückes 40 durch mehrere in Umfangsrichtung verteilte Schraubbolzen 42 an der Kurbelwelle 20 des Verbrennungsmotors 13 befestigt ist. Das erste Trageteil 38 umfasst einen sich von der Drehachse A erstreckenden radialen Abschnitt 39 und geht dann über in einen rohrförmigen Abschnitt 41, der mit einem sich radial erstreckenden Abschnitt 43 eines zweiten ebenfalls topfförmigen Trageteils 44 verschweißt ist. Auf diese Weise bildet das Eingangsteil 24 mit dessen ersten und zweiten Trageteil 38, 44 ein Gehäuse 46 und gleichzeitig die Federkammer des Torsionsschwingungsdämpfers 22 aus.

Aus den Figuren ist ersichtlich, dass der Rotorträger 37 der elektrischen Maschine 12 ebenfalls topfförmig unter Ausbildung eines im Wesentlichen radialen Abschnittes 48 und eines rohrförmigen Abschnittes 50 gefertigt ist, wobei dessen Außendurchmesser geringfügig kleiner ist als der Innendurchmesser des ersten Trageteils 38 des Torsionsschwingungsdämpfers 22, welches den Rotor 16 zumindest axial teilweise, genauer den rohrförmigen Abschnitt 50 des Rotorträgers 37 umgibt bzw. teilweise in sich aufnimmt.

Das Ausgangsteil 30 destorsionsschvvingungsdämpfers 22 wird gebildet durch ein wiederum topfförmiges Blechelement 52, welches im Wesentlichen innerhalb des Gehäuses 46 ausgebildet ist und in der oben beschriebenen Weise Anschläge für die Federsätze 34 umfasst. Im radial inneren Bereich ist ein Axialfortsatz 54 ausgebildet, der mit einem Radiallager 56 auf einem am Eingangsteil 24 ausgebildeten weiteren Axialfortsatz 58 gelagert ist. Zusätzlich kann, wie dieses in Fig. 2 zu erkennen ist, in diesem Bereich ein Axiallager 60 angeordnet sein. Die Sekundärschwungmasse 32 ist als eine Druckplatte 62 einer im Drehmomentübertagungsweg auf den Torsionsschwingungsdämpfer 22 folgenden Reibungskupplung 64 (siehe Fig. 2) ausgebildet und ist als ein im Wesentlichen scheibenförmiges Gussteil geformt. Die Sekundärschwungmasse 32 ist in deren radial inneren Bereich mit dem Blechelement 52 durch Nietverbindungen 66 fest verbunden und stellt in dessen radial äußeren Bereich eine Gewindebohrung 68 zum Anschluss eines Gehäuses einer Reibungskupplung 64 bereit, welche mit deren Kupplungsscheibe 70 bzw. - scheiben 70 mit der Eingangswelle 72 eines im Kraftübertragungsweg nachfolgenden Getriebes 74 wirkverbunden ist. An der der Kupplung 64 zugewandten Seite des Getriebes 74 ist eine Ausrückvorrichtung 76 zum Betätigen der Reibungskupplung 64 verschraubt. Das Getriebe 74 ist mit einer an dem Verbrennungsmotor (13) festgelegten Getriebeglocke 78 versehen, deren Innenkontor in Fig. 2 gezeigt ist, welche die elektrische Maschine 12, den Torsionsschwingungsdämpfer 22 und die Kupplung 64 aufnehmen kann. Alternativ kann zwischen dem Verbrennungsmotor 13 und dem Getriebe 74 auch ein Zwischengehäuse vorgesehen werden.

Der Rotor 16 der elektrischen Maschine 12 umfasst ein vom rohrförmigen Abschnitt 50 des Rotorträgers 37 aufgenommenes Blechpaket 80, an dessen Innenfläche in Umfangsrichtung eine Mehrzahl von axial ausgerichteten Permanentmagneten 82 angeordnet ist. Diese Magnete 82 stehen über einen radialen Luftspalt 84 in Wechselwirkung mit an einem Statorjoch 86 angeordneten Spulen 88. Der Stator 14 umfasst einen Statorträger 89, der durch eine Mehrzahl von Schraubbolzen 90 an dem Verbrennungsmotor 13 festgelegt ist. Rotorträger 37 weist zur Montage des Stators 14 Öffnungen 92 auf, durch welche die Schraubbolzen 90 vollständig hindurchgesteckt werden können.

Die Statorspulen 88 sind mittels einer Verschaltungseinrichtung 94 untereinander verschaltet und über einen zum Beispiel an der Außenwandung der Getriebeglocke 78 oder des Zwischengehäuses befestigten Anschlusskasten mit dem Pulswechselrichter verbunden. Die Verschaltungseinrichtung 94 umfasst in der Fig. 1 drei radial angeordnete ringförmige Leiterelemente 96, die durch Isolationsringe gegenseitig beabstandet und voneinander isoliert sind. Die Leiterelemente 96 können jedoch auch axial auf dem Stator 14 angeordnet sein. Die Verschaltungseinrichtung 94 ist günstigerweise radial außerhalb der Statorspulen 88 und im Wesentlichen innerhalb derer axialen Erstreckung an der dem Verbrennungsmotor 13 zugewandten Seite des Stators 14 angeordnet, da an dieser Position die Verbindungsleiter zum dem Anschlusskasten besonders kurz gehalten werden und elektrische Leistungsverluste somit minimiert werden können.

Die während des Betreibens der elektrischen Maschine 12 entstehende Verlustwärme wird über mit einem Kühlfluid befüllte Kühlkanäle 98 an einen nicht dargestellten Wärmetauscher abgegeben. Ein bei dem Verbrennungsmotor 13 vorhandener Kühlkreislauf wird hierbei gemeinsam mit dem Startergenerator 12 benutzt, wobei im Verbrennungsmotor 13 ausgebildete Kühlkanäle 100 unmittelbar in den Statorträger 89 übergehen.

Die in der Fig. 2 dargestellte Antriebsanordnung 10 unterscheidet sich insbesondere in der Konstruktion des Torsionsschwingungsdämpfers 22 gegenüber der in Fig. 1 dargestellten Anordnung.

Bei diesem Ausführungsbeispiel wurde auf ein separates Eingangsteil, d.h. auf das in Fig. 1 dargestellte erste Trageteil 38 des Torsionsschwingungsdämpfers 22 verzichtet und stattdessen der Rotorträger 37 der elektrischen Maschine 12 als Trageteil des Torsionsschwingungsdämpfers 22 ausgebildet. Zur Abstützung der Federsätze 34 sind am rohrförmigen Abschnitt 50 des Rotorträgers 37 eine Mehrzahl von nach-radial außen abstehenden Stege 102 angeschweißt, an denen beidseitig Auflageelemente 104 zur Vergrößerung der Anlagefläche für die Federsätze 34 angenietet sind. Die Federkammer 36 weist einen radial außenliegenden Wandungsbereich 106 und stirnseitige Wandungsbereiche 108 auf, welche von einem sekundärseitig am Torsionsschwingungsdämpfer 22 angeordnetem zusammengesetzten Sekundärblech 110 gebildet werden, wogegen lediglich ein radial innenliegender Wandungsbereich von dem Eingangsteil 24, genauer dem rohrförmigen Abschnitt 50 gebildet wird. Das Gehäuse des Torsionsschwingungsdämpfers 22 wird hierbei also im Wesentlichen von dem Sekundärblech 110 geformt.

Der in Fig. 2 dargestellte Torsionsschwingungsdämpfer 22 umfasst ferner ein zur Dämpfung antriebsseitiger Torsionsschwingungen vorgesehenes Planetengetriebe 112 mit am Eingangsteil 24 angeordneten Planetenrädern 114, die mit einer am Ausgangsteil 30, zumindest innerhalb eines gegenseitigen Verdrehbereiches, den Planetenrädern 114 radial außen gegenüberliegend ausgebildeten Verzahnung 116 kämmt. Das Planetengetriebe 112 ist gegenüber der Federkammer 36 in einer Getriebekammer 118 angeordnet, welche stirnseitig und radial außen von dem Sekundärblech 110 und einem mit diesem verbunden Deckblech 120 und radial innen von einem axial in Bezug zum Wandbereich 108 überstehenden Abschnitt des Rotorträgers 37 ausgebildet wird. Die Planetenräder 114 sind mittels Kunststoffschnappringen 122 drehbar an einem radial abstehenden Kragen 124 des Rotorträgers 37 angeordnet. Zwischen dem Kragen 124 und dem Deckblech 120 ist zum Schutz vor dem Eintritt von Schmutz und vor dem Austritt von in der Federkammer 36 und gegebenenfalls in der Getriebekammer 118 enthaltenem Fett eine Tellerfeder 126 eingesetzt, welche auch zwischen dem Eingangs- und Ausgangsteil 24, 30 eine Grundreibung zur Schwingungsdämpfung erzeugt. Eine weitere Besonderheit besteht darin, dass die Sekundärschwungmasse 32 topfförmig mit einem sich zusätzlich zu einem radial verlaufenden Massenabschnitt 128 einen sich daran anschließenden axial verlaufenden Massenabschnitt 130 umfasst, welcher die Kupplungsscheiben 70 einer als Zweischeibenanordnung konzipierten Reibungskupplung 64 und deren weitere Druckplatten 134, 136 in sich aufnimmt. Die Sekundärschwungmasse 32 bildet hierbei das Kupplungsgehäuse, so dass sich ein eigenständiges Kupplungsgehäuse erübrigt.

### Bezugszeichenliste

- 10: Antriebsanordnung
- 12: elektrische Maschine
- 13: Verbrennungsmotor
- 14: Stator
- 16: Rotor
- 18: Distanzstück
- 20: Kurbelwelle
- 22: Torsionsschwingungsdämpfer
- 24: Eingangsteil
- 26: Primärschwungmasse
- 28: Federspeicher
- 30: Ausgangsteil
- 32: Sekundärschwungmasse
- 34: Federsatz
- 36: Federkammer
- 37: Rotorträger
- 38: erstes Trageteil
- 39: radialer Abschnitt
- 40: Distanzstück
- 41: rohrförmiger Abschnitt
- 42: Schraubbolzen
- 43: radialer Abschnitt
- 44: Trageteil
- 46: Gehäuse
- 48: radialer Abschnitt
- 50: rohrförmiger Abschnitt
- 52: topfförmiges Blechelement
- 54: Axialfortsatz
- 56: Radiallager
- 58: Axialfortsatz
- 60: Axiallager
- 62: Druckplatte
- 64: Reibungskupplung
- 66: Nietverbindung
- 68: Gewindebohrung
- 70: Kupplungsscheibe
- 72: Getriebeeingangswelle
- 74: Getriebe
- 76: Ausrückvorrichtung
- 78: Getriebeglocke
- 80: Blechpaket
- 82: Permanentmagnet
- 84: Luftspalt
- 86: Statorjoch
- 88: Spule
- 89: Statorträger
- 90: Schraubbolzen
- 92: Öffnung
- 94: Verschaltungseinrichtung
- 96: Leiterelemente
- 98: Kühlkanal
- 100: Kühlkanal
- 102: Steg
- 104: Auflageelement
- 106: Wandungsbereich
- 108: Wandungsbereich
- 110: Sekundärblech
- 112: Planetengetriebe
- 114: Planetenrad
- 116: Verzahnung
- 118: Getriebekammer
- 120: Deckblech
- 122: Kunststoffschnappring
- 124: Kragen
- 126: Tellerfeder
- 128: radialer Masseabschnitt
- 130: axialer Masseabschnitt
- 134: Druckplatte
- 136: Druckplatte

## Patentansprüche

1. Antriebsanordnung (10) für ein Kraftfahrzeug, umfassend
- eine elektrische Maschine (12) mit einem Stator (14) und einem Rotor (16), welcher mit einer Abtriebswelle (20) eines Verbrennungsmotors wirkverbunden ist und
- einen Torsionsschwingungsdämpfer (22) mit einem Eingangsteil (24) mit einer Primärschwungmasse (26) und einem mit diesem über einen Federspeicher (28) verbundenem Ausgangsteil (30) mit einer Sekundärschwungmasse (32) welcher zu dem Eingangsteil (24) relativ verdrehbar ist, wobei
der Rotor (16) der elektrischen Maschine (12) als Außenläufer ausgebildet ist und eine der Schwungmassen (26, 32) des Torsionsschwingungsdämpfers (22) bildet, **dadurch gekennzeichnet, dass** der Federspeicher (28) radial außerhalb des Rotors (16) angeordnet ist.

2. Antriebsanordnung nach Anspruch 1,
**dadurch gekennzeichnet, dass** der Federspeicher (28) zumindest teilweise innerhalb der axialen Erstreckung des Rotors (16) angeordnet ist.

3. Antriebsanordnung nach Anspruch 1 oder 2,
**dadurch gekennzeichnet, dass** der Federspeicher (28) in einer Federkammer (36) angeordnet ist und axial benachbarte und jeweils in Umfangsrichtung des Torsionsschwingungsdämpfers (22) angeordnete Federsätze (34) umfasst.

4. Antriebsanordnung nach einem der vorhergehenden Ansprüche,
**dadurch gekennzeichnet, dass** das Eingangsteil (24) als Gehäuse (46) des Torsionsschwingungsdämpfers (22) ausgebildet ist und dieser zumindest axial teilweise einen rohrförmigen Abschnitt (50) eines Rotorträgers (37) der elektrischen Maschine (12) umgibt.

5. Antriebsanordnung nach einem der Ansprüche 1 bis 3,
**dadurch gekennzeichnet, dass** die Federkammer (36) einen radial außenliegenden Wandungsbereich (106) und stirnseitige Wandungsbereiche (108) aufweist, welche von dem Ausgangsteil (30) gebildet werden und weiter einen von dem Rotorträger (37) gebildeten radial innenliegenden Wandungsbereich (50) umfasst.

6. Antriebsanordnung nach einem der vorhergehenden Ansprüche,
**dadurch gekennzeichnet, dass** der Rotorträger (37) als Eingangsteil des Torsionsschwingungsdämpfers (22) ausgebildet ist und Stege (102) zur einseitigen Anlage der Federsätze (34) aufweist.

7. Antriebsanordnung nach einem der vorhergehenden Ansprüche,
**dadurch gekennzeichnet, dass** die Federkammer (36) fettbefüllt ist.

8. Antriebsanordnung nach einem der vorhergehenden Ansprüche,
**dadurch gekennzeichnet, dass** der Torsionsschwingungsdämpfer (22) ein Planetengetriebe (112) mit mindestens einem am Eingangsteil (24) angeordneten Planetenrad (114) umfasst, das mit einer am Ausgangsteil (30) ausgebildeten Verzahnung (116) kämmt.

9. Antriebsanordnung nach Anspruch 8,
**dadurch gekennzeichnet, dass** das mindestens eine Planetenrad (114) auf einem mit dem Eingangsteil (24) verbundenen Schnappring (122) angeordnet ist.

10. Antriebsanordnung nach einem der vorhergehenden Ansprüche,
**dadurch gekennzeichnet, dass** das Ausgangsteil (30) des Torsionsschwingungsdämpfers (22) an dessen Eingangsteil (24) gelagert ist.

11. Antriebsanordnung nach einem der vorhergehenden Ansprüche,
**dadurch gekennzeichnet, dass** der Rotor (16) der elektrischen Maschine (12) drehfest mit der Abtriebswelle (20) des Verbrennungsmotors (13) verbunden ist.

12. Antriebsanordnung nach einem der vorhergehenden Ansprüche,
**dadurch gekennzeichnet, dass** der Rotor (16) der elektrischen Maschine (12) mit dem Eingangsteil (24) des Torsionsschwingungsdämpfers (22) verbunden ist und die Primärschwungmasse (26) bildet.

13. Antriebsanordnung nach einem der vorhergehenden Ansprüche,
**dadurch gekennzeichnet, dass** der Stator (14) der elektrischen Maschine (12) am Verbrennungsmotor (13) festgelegt ist.

14. Antriebsanordnung nach einem der vorhergehenden Ansprüche,
**dadurch gekennzeichnet, dass** die elektrische Maschine (12) und der Verbrennungsmotor (13) einen gemeinsamen Kühlkreislauf aufweisen, wobei im Verbrennungsmotor (13) ausgebildete Kühlkanäle (100) unmittelbar in Kühlkanäle (98) eines Statorträgers (89) übergehen.

15. Antriebsanordnung nach einem der vorhergehenden Ansprüche,
**dadurch gekennzeichnet, dass** die elektrische Maschine (12) als permanenterregte Synchronmaschine ausgebildet ist.

16. Antriebsanordnung nach einem der vorhergehenden Ansprüche,
**dadurch gekennzeichnet, dass** der Stator (14) der elektrischen Maschine (12) eine Mehrzahl von Statorspulen (88) aufweist, die mittels einer Verschaltungseinrichtung (94) untereinander verschaltet und mit einer Ansteuerelektronik verbunden sind.

17. Antriebsanordnung nach Anspruch 16,
**dadurch gekennzeichnet, dass** die Verschaltungseinrichtung (94) radial außerhalb der Statorspulen (88) und im Wesentlichen innerhalb deren axialen Erstreckung an der dem Verbrennungsmotor (13) zugewandten Seite des Stators (14) angeordnet ist.

18. Antriebsanordnung nach einem der vorhergehenden Ansprüche,
**dadurch gekennzeichnet, dass** die elektrische Maschine (12) als Startergenerator ausgebildet ist und eine motorische Betriebsweise zum Starten des Verbrennungsmotors (13) und zum Antreiben des Kraftfahrzeuges aufweist und weiterhin eine generatorische Betriebsweise zur Erzeugung von elektrischer Leistung für ein Kraftfahrzeugbordnetz aufweist.

19. Antriebsanordnung nach einem der vorhergehenden Ansprüche,
**dadurch gekennzeichnet, dass** der Rotorträger (37) topfförmig ausgebildet ist und einen sich im Wesentlichen radialen Abschnitt (48) und einen an diesen anschließenden rohrförmigen Abschnitt (50), umfasst.

20. Antriebsanordnung nach einem der vorhergehenden Ansprüche,
**dadurch gekennzeichnet, dass** der Rotor (16) und der Torsionsschwingungsdämpfer (22) durch gemeinsame Befestigungselemente (42) am Verbrennungsmotor (13) festgelegt sind.

21. Antriebsanordnung nach einem der vorhergehenden Ansprüche,
**dadurch gekennzeichnet, dass** die Antriebsanordnung (10) eine Reibungskupplung (64) mit mindestens einer Druckplatte (62) aufweist, welche von der Sekundärschwungmasse (32) des Torsionsschwingungsdämpfers (22) gebildet wird.

22. Antriebsanordnung nach Anspruch 21,
**dadurch gekennzeichnet, dass** die Kupplung (64) mindestens eine Kupplungsscheibe (70) aufweist, die mit der Eingangswelle (72) eines im Kraftübertragungsweg nachfolgenden Getriebes (74) wirkverbunden ist.

23. Antriebsanordnung nach Anspruch 21 oder 22,
**dadurch gekennzeichnet, dass** die Sekundärschwungmasse (32) topfförmig ausgebildet ist und eine weitere Druckplatte (134, 136) radial innerhalb der Sekundärschwungmasse (32) angeordnet ist.

24. Antriebsanordnung nach Anspruch 21 oder 22,
**dadurch gekennzeichnet, dass** die Sekundärschwungmasse (32) im Wesentlichen scheibenförmig ausgebildet ist und einen Montageanschluss (68) zur Montage einer Kupplung (64) bereitstellt.

25. Antriebsanordnung nach einem der vorhergehenden Ansprüche,
**dadurch gekennzeichnet, dass** das Getriebe (74) eine Getriebeglocke (78) aufweist, welche die elektrische Maschine (12), den Torsionsschwingungsdämpfer (22) und die Kupplung (64) in sich aufnimmt.

## Claims

1. Drive arrangement (10) for a motor vehicle, comprising
- an electric machine (12) having a stator (14) and a rotor (16) which is operatively connected to an output shaft (20) of an internal combustion engine, and
- a torsional vibration damper (22) having an input part (24) with a primary centrifugal mass (26) and an output part (30) which is connected to the said input part (24) via a spring-force accumulator (28) and has a secondary centrifugal mass (32) which can be rotated relative to the input part (24),
the rotor (16) of the electric machine (12) being configured as an external rotor and forming one of the centrifugal masses (26, 32) of the torsional vibration damper (22), **characterized in that** the spring-force accumulator (28) is arranged radially outside the rotor (16).

2. Drive arrangement according to Claim 1, **characterized in that** the spring-force accumulator (28) is arranged at least partially within the axial extent of the rotor (16).

3. Drive arrangement according to Claim 1 or 2, **characterized in that** the spring-force accumulator (28) is arranged in a spring chamber (36) and comprises axially adjacent spring sets (34) which are each arranged in the circumferential direction of the torsional vibration damper (22).

4. Drive arrangement according to one of the preceding claims, **characterized in that** the input part (24) is configured as a housing (46) of the torsional vibration damper (22), and the latter surrounds, at least axially partially, a tubular section (50) of a rotor carrier (37) of the electric machine (12).

5. Drive arrangement according to one of Claims 1 to 3, **characterized in that** the spring chamber (36) has a radially outer wall region (106) and end-side wall regions (108) which are formed by the output part (30), and further comprises a radially inner wall region (50) which is formed by the rotor carrier (37).

6. Drive arrangement according to one of the preceding claims, **characterized in that** the rotor carrier (37) is configured as an input part of the torsional vibration damper (22) and has webs (102) for the one-sided contact of the spring sets (34).

7. Drive arrangement according to one of the preceding claims, **characterized in that** the spring chamber (36) is filled with grease.

8. Drive arrangement according to one of the preceding claims, **characterized in that** the torsional vibration damper (22) comprises a planetary gear mechanism (112) having at least one planetary gear (114) which is arranged on the input part (24) and meshes with a toothing system (116) which is formed on the output part (30).

9. Drive arrangement according to Claim 8, **characterized in that** the at least one planetary gear (114) is arranged on a snap-in ring (122) which is connected to the input part (24).

10. Drive arrangement according to one of the preceding claims, **characterized in that** the output part (30) of the torsional vibration damper (22) is mounted on its input part (24).

11. Drive arrangement according to one of the preceding claims, **characterized in that** the rotor (16) of the electric machine (12) is connected fixedly in terms of rotation to the output shaft (20) of the internal combustion engine (13).

12. Drive arrangement according to one of the preceding claims, **characterized in that** the rotor (16) of the electric machine (12) is connected to the input part (24) of the torsional vibration damper (22) and forms the primary centrifugal mass (26).

13. Drive arrangement according to one of the preceding claims, **characterized in that** the stator (14) of the electric machine (12) is fixed to the internal combustion engine (13).

14. Drive arrangement according to one of the preceding claims, **characterized in that** the electric machine (12) and the internal combustion engine (13) have a common coolant circuit, cooling ducts (100) which are formed in the internal combustion engine (13) merging directly into cooling ducts (98) of a stator carrier (89).

15. Drive arrangement according to one of the preceding claims, **characterized in that** the electric machine (12) is configured as a permanently excited synchronous machine.

16. Drive arrangement according to one of the preceding claims, **characterized in that** the stator (14) of the electric machine (12) has a multiplicity of stator coils (88) which are connected to one another by means of a connection device (94) and are connected to actuating electronics.

17. Drive arrangement according to Claim 16, **characterized in that** the connection device (94) is arranged radially outside the stator coils (88) and substantially within their axial extent on that side of the stator (14) which faces the internal combustion engine (13).

18. Drive arrangement according to one of the preceding claims, **characterized in that** the electric machine (12) is configured as a starter generator and has a motor operation mode for starting the internal combustion engine (13) and for driving the motor vehicle and, furthermore, has a generator operation mode for generating electric power for a motor vehicle-mounted electrical system.

19. Drive arrangement according to one of the preceding claims, **characterized in that** the rotor carrier (37) is of cup-shaped configuration and comprises a substantially radial section (48) and a tubular section (50) which adjoins the latter.

20. Drive arrangement according to one of the preceding claims, **characterized in that** the rotor (16) and the torsional vibration damper (22) are fixed on the internal combustion engine (13) by common fastening elements (42).

21. Drive arrangement according to one of the preceding claims, **characterized in that** the drive arrangement (10) has a friction clutch (64) with at least one pressure plate (62) which is formed by the secondary centrifugal mass (32) of the torsional vibration damper (22).

22. Drive arrangement according to Claim 21, **characterized in that** the clutch (64) has at least one clutch plate (70) which is operatively connected to the input shaft (72) of a transmission (74) which follows in the force transmission path.

23. Drive arrangement according to Claim 21 or 22, **characterized in that** the secondary centrifugal mass (32) is of cup-shaped configuration, and a further pressure plate (134, 136) is arranged radially within the secondary centrifugal mass (32).

24. Drive arrangement according to Claim 21 or 22, **characterized in that** the secondary centrifugal mass (32) is of substantially disc-shaped configuration and provides a mounting connection (68) for mounting a clutch (64).

25. Drive arrangement according to one of the preceding claims, **characterized in that** the transmission (74) has a transmission bell (78) which accommodates the electric machine (12), the torsional vibration damper (22) and the clutch (64) inside it.

## Revendications

1. Système d'entraînement (10) pour un véhicule automobile, comprenant
- une machine électrique (12) avec un stator (14) et un rotor (16), qui est en liaison active avec un arbre de sortie (20) d'un moteur à combustion interne, et
- un amortisseur de vibrations de torsion (22) avec une pièce d'entrée (24) avec une masse d'équilibrage primaire (26) et une pièce de sortie (30) avec une masse d'équilibrage secondaire (32), pièce de sortie reliée à la pièce d'entrée par un accumulateur à ressorts (28) et pouvant tourner par rapport à la pièce d'entrée (24),
- dans lequel le rotor (16) de la machine électrique (12) est constitué par un induit extérieur et forme une des masses d'équilibrage (26, 32) de l'amortisseur de vibrations de torsion (22),
**caractérisé en ce que** l'accumulateur à ressorts (28) est disposé radialement à l'extérieur du rotor (16).

2. Système d'entraînement selon la revendication 1, **caractérisé en ce que** l'accumulateur à ressorts (28) est disposé au moins partiellement à l'intérieur de l'extension axiale du rotor (16).

3. Système d'entraînement selon la revendication 1 ou 2, **caractérisé en ce que** l'accumulateur à ressorts (28) est disposé dans une chambre de ressorts (36) et comprend des jeux de ressorts (34) axialement voisins et chaque fois disposés dans la direction périphérique de l'amortisseur de vibrations de torsion (22).

4. Système d'entraînement selon l'une quelconque des revendications précédentes, **caractérisé en ce que** la pièce d'entrée (24) forme le boîtier (46) de l'amortisseur de vibrations de torsion (22) et ce dernier entoure au moins axialement en partie une portion tubulaire (50) d'un support de rotor (37) de la machine électrique (12).

5. Système d'entraînement selon l'une quelconque des revendications 1 à 3, **caractérisé en ce que** la chambre de ressorts (36) présente une région de paroi située radialement à l'extérieur (106) et des régions de paroi du côté frontal (108), qui sont formées par la pièce de sortie (30), et comprend en outre une région de paroi (50) située radialement à l'intérieur et formée par le support de rotor (37).

6. Système d'entraînement selon l'une quelconque des revendications précédentes, **caractérisé en ce que** le support de rotor (37) forme la pièce d'entrée de l'amortisseur de vibrations de torsion (22) et présente des nervures (102) pour l'appui unilatéral des jeux de ressorts (34).

7. Système d'entraînement selon l'une quelconque des revendications précédentes, **caractérisé en ce que** la chambre de ressorts (36) est remplie de graisse.

8. Système d'entraînement selon l'une quelconque des revendications précédentes, **caractérisé en ce que** l'amortisseur de vibrations de torsion (22) comprend un engrenage planétaire (112) avec au moins une roue planétaire (114) montée sur la pièce d'entrée (24), qui est en prise avec une denture (116) formée sur la pièce de sortie (30).

9. Système d'entraînement selon la revendication 8, **caractérisé en ce que** la au moins une roue planétaire (114) est disposée sur un anneau à déclic (122) assemblé à la pièce d'entrée (24).

10. Système d'entraînement selon l'une quelconque des revendications précédentes, **caractérisé en ce que** la pièce de sortie (30) de l'amortisseur de vibrations de torsion (22) est supportée sur la pièce d'entrée (24) de celui-ci.

11. Système d'entraînement selon l'une quelconque des revendications précédentes, **caractérisé en ce que** le rotor (16) de la machine électrique (12) est calé sur l'arbre de sortie (20) du moteur à combustion interne (13).

12. Système d'entraînement selon l'une quelconque des revendications précédentes, **caractérisé en ce que** le rotor (16) de la machine électrique (12) est assemblé à la pièce d'entrée (24) de l'amortisseur de vibrations de torsion (22) et forme la masse d'équilibrage primaire (26).

13. Système d'entraînement selon l'une quelconque des revendications précédentes, **caractérisé en ce que** le stator (14) de la machine électrique (12) est fixé sur le moteur à combustion interne (13).

14. Système d'entraînement selon l'une quelconque des revendications précédentes, **caractérisé en ce que** la machine électrique (12) et le moteur à combustion interne (13) présentent un circuit de refroidissement commun, dans lequel des canaux de refroidissement (100) formés dans le moteur à combustion interne (13) se prolongent immédiatement en canaux de refroidissement (98) d'un support de stator (89).

15. Système d'entraînement selon l'une quelconque des revendications précédentes, **caractérisé en ce que** la machine électrique (12) est constituée par une machine synchrone à excitation permanente.

16. Système d'entraînement selon l'une quelconque des revendications précédentes, **caractérisé en ce que** le stator (14) de la machine électrique (12) présente une pluralité de bobines de stator (88), qui sont connectées les unes aux autres par un dispositif de connexion (94) et qui sont raccordées à une électronique de commande.

17. Système d'entraînement selon la revendication 16, **caractérisé en ce que** le dispositif de connexion (94) est disposé radialement à l'extérieur des bobines de stator (88) et sensiblement à l'intérieur de leur extension axiale sur le côté du stator (14) tourné vers le moteur à combustion interne (13).

18. Système d'entraînement selon l'une quelconque des revendications précédentes, **caractérisé en ce que** la machine électrique (12) forme un générateur de démarrage et présente un mode de fonctionnement en moteur pour le démarrage du moteur à combustion interne (13) et pour l'entraînement du véhicule automobile et présente en outre un mode de fonctionnement en générateur pour la production de puissance électrique pour un réseau électrique à bord du véhicule automobile.

19. Système d'entraînement selon l'une quelconque des revendications précédentes, **caractérisé en ce que** le support de rotor (37) est réalisé en forme de pot et comprend une portion essentiellement radiale (48) et une portion tubulaire (50) se raccordant à celle-ci.

20. Système d'entraînement selon l'une quelconque des revendications précédentes, **caractérisé en ce que** le rotor (16) et l'amortisseur de vibrations de torsion (22) sont fixés sur le moteur à combustion interne (13) au moyen d'éléments de fixation communs (42).

21. Système d'entraînement selon l'une quelconque des revendications précédentes, **caractérisé en ce que** le système d'entraînement (10) comporte un accouplement à friction (64) avec au moins un plateau de pression (62), qui est formé par la masse d'équilibrage secondaire (32) de l'amortisseur de vibrations de torsion (22).

22. Système d'entraînement selon la revendication 21, **caractérisé en ce que** l'accouplement (64) présente au moins un disque d'accouplement (70), qui est en liaison active avec l'arbre d'entrée (72) d'un engrenage (74) suivant dans le chemin de transmission des forces.

23. Système d'entraînement selon la revendication 21 ou 22, **caractérisé en ce que** la masse d'équilibrage secondaire (32) est réalisée en forme de pot et un autre plateau de pression (134, 136) est disposé radialement à l'intérieur de la masse d'équilibrage secondaire (32).

24. Système d'entraînement selon la revendication 21 ou 22, **caractérisé en ce que** la masse d'équilibrage secondaire (32) est réalisée sensiblement en forme de disque et présente un raccord de montage (68) pour le montage d'un accouplement (64).

25. Système d'entraînement selon l'une quelconque des revendications précédentes, **caractérisé en ce que** l'engrenage (74) présente une cloche d'engrenage (78), qui abrite en elle la machine électrique (12), l'amortisseur de vibrations de torsion (22) et l'accouplement (64).
